# EUROPEAN PATENT APPLICATION

(11) **EP 1 538 761 A2**
(43) Date of publication of application: **08.06.2005**
(21) Application number: 04028090.1
(22) Date of filing: 25.11.2004
(51) Int. Cl.: H04B 7/08

(54) **Diversity receiver**

(30) Priority: 05.12.2003 JP 2003406963
(71) Applicant: Pioneer Corporation, Meguro-ku, Tokyo (JP)
(72) Inventor: Kawakami, Yasuo, Pioneer Corporation, Kawagoe-shi Saitama-ken 350-8555 (JP)
(74) Representative: Bohnenberger, Johannes, Dr.

(57) **Abstract**

A reception quality as stable as possible, by correctly judging a situation in which an operation of changing a reception condition is necessary, and preventing a reception state from getting worse even if it is already in a bad state. At the time of a normal reception (step S401), the BER of a received transmission signal is measured (step S403), and if the value of the BER has exceeded a specified value, the operation of changing the reception condition is started, and a CNR is measured (step S407). If the value of the CNR has exceeded its previous value, the reception condition will be changed (step S411), and if it has become lower than its previous value, the reception condition will be returned back to its previous condition (Step 414) . In this way, it is possible to obtain a stable reception quality by searching for an optimal reception condition utilizing CNR and selecting an antenna corresponding to the reception condition thus found.

## Description

### BACKGROUND OF THE INVENTION

The present invention relates to a receiver, a receiving Method, a reception control program, and a storage medium.

Conventionally, a diversity reception of a receiver for receiving FM and TV broadcastings has been used as an effective method for stabilizing and receiving a reception radio wave. Such a diversity reception is realized by at least two antennas (not shown), a selection unit for selecting an antenna having an acceptable reception state among a plurality of antennas, and a tuner unit for demodulating a received signal received through an antenna selected by the selection unit. Since the tuner unit has a so-called "one-tuner diversity" configuration including only one-system input, it is allowed to reduce the number of tuner units and thus realize a reduced production cost. For this reason, a receiver based on such a diversity has become a mainly acceptable receiver at present on the market.

In recent years, digital broadcasting has adopted an OFDM (Orthogonal Frequency Division Multiplexing) system which is strong against a multipass or a fading. Further, such digital broadcasting also involves an improved receiver which, in order to stabilize and receive a reception radio wave in a mobile body, has adopted a diversity reception technique capable of suitably performing switchover among a plurality of antennas (as disclosed in Japanese Unexamined Patent Application Publication No. 2002-33688). A receiver disclosed in this patent publication is so formed that it can detect an error rate of a received signal received by each of the plurality of antennas, and then select an antenna having a low error rate.

However, since digital broadcasting will suddenly render a desired reception completely impossible once a reception error occurs and a synchronization gets deviated, and since it is impossible to immediately restart reception even if reception condition has been restored, a user will suffer from an undesired situation of not being able to receive his or her desired broadcasting. Accordingly, with regard to a diversity reception in digital broadcasting, it is extremely necessary to avoid any reception error by performing a diversity operation through a switchover among a plurality of antennas. Namely, it is needed to carry out the diversity operation only when required. In other words, it is necessary to correctly judge whether the diversity operation must be performed, or whether the diversity operation is not absolutely necessary to be carried out.

It is understood from the above-mentioned patent publication that when an antenna currently receiving a radio wave is in its deteriorated reception state and an error rate exceeds a predetermined threshold value, this antenna will be switched over to next one determined in advance, so as to find a bit error rate, and, after the bit error rates of all antennas have been memorized, an antenna having the lowest error rate is selected, hence requiring an elongated operation time before an antenna switchover is performed. Moreover, since it is necessary to carry out a diversity operation which successively switchovers antennas one by one in accordance with a calculated bit error rate during each predetermined time period, it is impossible to correctly judge a situation in which the diversity operation must be carried out. As a result, since there is a danger of worsening a reception state, it is impossible to use the diversity operation in receiving a digital transmission signal of digital broadcasting or the like. Thus, with the above-discussed conventional technique, it is impossible to ensure a stabilized reception state by using a receiver which receives digital broadcasting first with one antenna, and then performs the above-discussed diversity operation.

### SUMMARY OF THE INVENTION

It is an object of the present invention to correctly judge a situation which requires an operation of changing a reception condition, prevent the reception condition from becoming further deteriorated even if it is already in a deteriorated state, thereby ensuring a stabilized reception quality.

According to one aspect of the present invention, there is provided a receiver comprising: a plurality of antennas for receiving a radio wave; received signal output means for outputting a received signal using one or more of the plurality of antennas; demodulating means for demodulating the received signal and outputting a demodulated signal; decoding means for correcting an error of the demodulated signal; detecting means for detecting an SN ratio of the received signal; and control means for controlling the received signal output means in accordance with a detected SN ratio and an error correction rate of the decoding means.

According to another aspect of the present invention, there is provided a receiving method comprising: a received signal outputting step of outputting a received signal, using one or more of a plurality of antennas; a demodulating step of modulating the received signal outputted in the received signal outputting step and outputting a demodulated signal; a decoding step of performing an error correction on the demodulated signal outputted from the demodulating step; a detecting step of detecting an SN ratio of the received signal; and a controlling step of controlling an output of the received signal in the received signal outputting step, in accordance with an SN ratio detected in the detecting step and an error correction rate of the demodulated signal outputted from the demodulating step.

According to a further aspect of the present invention, there is provided a reception control program for controlling a receiver by a computer, which receiver outputs a received signal using one or more of a plurality of antennas, demodulates the received signal and outputs a demodulated signal, and performs an error correction on the demodulated signal. In particular, the reception control program enables the computer to detect an SN ratio of the received signal, and controls the output of the received signal in accordance with the detected SN ratio and an error correction rate of the demodulated signal.

According to one more aspect of the present invention, there is provided a storage medium storing the foregoing reception control program.

### BRIEF DESCRIPTION OF THE DRAWINGS

These and other obj ects and advantages of the present invention will become clear from the following description with reference to the accompanying drawings, wherein:
Fig.1 is a block diagram showing functions of a receiver formed according to one embodiment of the present invention;
Fig. 2 is a block diagram showing an arrangement of hardware of the receiver;
Fig. 3 is a graph showing a reception state when the respective values of BER and CNR change;
Fig.4 is a flow chart showing the contents of a processing for changing a reception condition according to Embodiment 1 of the present invention;
Fig. 5 is a chart showing the contents of a transmission signal;
Fig. 6 is a flowchart showing the contents of a processing for changing a reception condition according to Embodiment 2 of the present invention;
Fig. 7 is a flow chart showing the contents of a processing for the switchover of reception condition according to Embodiment 2 of the present invention; and
Fig. 8 is a flow chart showing the contents of a processing for changing a reception condition according to Embodiment 3 of the present invention.

### DETAILED DESCRIPTION OF THE PREFERRED EMBODIMENTS

In the following, description will be given in detail to explain several preferred embodiments of the receiver, the receiving method, the reception control program, and the storage medium formed according to the present invention, with reference to the accompanying drawings.

The following embodiment is based on a digital broadcast receiver using OFDM system, which is one example of digital broadcast receiver having a correction function containing Reed Solomon code or the like. Therefore, it is an object of the present embodiment to correctly judge a situation which requires an operation of changing a reception condition, prevent the reception condition frombecoming further deteriorated even if it is already in a deteriorated state, thereby ensuring a stabilized reception quality.

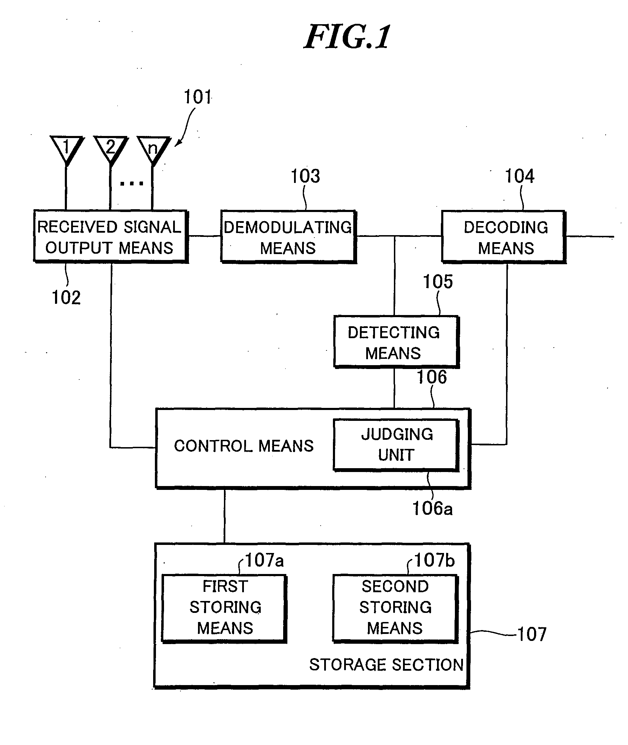

Next, the present embodiment will be described with reference to the accompanying drawings. Fig.1 is a block diagram showing the functions of the receiver formed according to this embodiment of the invention. In fact, Fig.1 is used to explain an outline of the entire constitution of the receiver. As shown in Fig.1, radio waves received by a plurality of antennas 101 are outputted as received signals through a received signal output means 102, using one or more antennas selected among the plurality of antennas 101. A demodulating means 103 demodulates the received signals outputted from the received signal output means 102, and outputs demodulated signals. A decoding means 104 will then operate to correct errors of the demodulated signals outputted from the demodulating means 103. A detecting means 105 operates to detect an SN ratio (SNR) of a received signal. However, the detection of such an SN ratio can be effected based on a signal before being demodulated, a signal being demodulated, or a signal after being modulated. A control means 106 operates to control the antennas connectedwith the received signal output means 102, in accordance with an SN ratio of a demodulated signal outputted from the demodulating means 103, as well as an error correction rate at the time when the decoding means 104 corrects an error of a demodulated signal.

The control means 106 is equipped with a judging unit 106a for judging whether the reception condition of the received signal output means 102 should be changed in accordance with the foregoing error correction rate. Here, the reception condition willbedecided by antennas when using an antenna switchover type, and will be decided by the phase differences and the gain levels of the respective antennas when using a phase difference feeding type. Further, "changing reception condition" means "changing the state of a received signal, using antenna switchover means or means for adjusting the phase differences and the gain levels of the respective antennas".

A storage section 107 stores various data in relation to the receiver of the present invention. A first storing means 107a contained in the storage section 107 stores a plurality of reception conditions of the received signal output means 102. Here, the first storing means 107a, by for example setting an identifying flag to the current reception condition, operates to identifiably store the current reception condition and other reception conditions. A second storing means 107b contained in the storage section 107 operates to store the values of SN ratios . In fact, the second storing means 107b operates to store the values of SN ratios, corresponding to the reception conditions stored in the first storing means 107a. Further, it is also possible to store only the value of an SN ratio based on the current reception condition, and then update its value if the reception condition has been changed. Then, once the judging unit 106a judges that a reception condition should be changed, the control means 106 will decide one reception condition among several reception conditions stored in the first storing means 107a, in accordance with the value of an SN ratio stored in the second storing means 107b, thereby performing an antenna control using the received signal output means 102 in accordance with the reception condition thus decided. In this way, if a reception condition is decided by using an SN ratio (SNR) , it is possible to judge a relative change of a reception state in a shorter time than judging a reception condition in accordance with an error rate (BER).

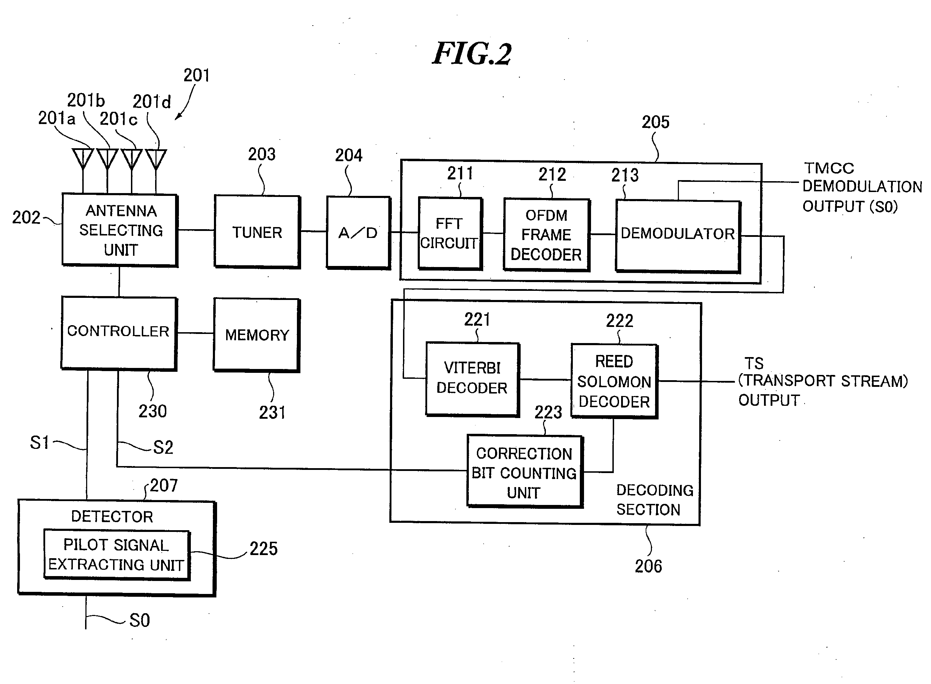

Fig. 2 is a block diagram showing the hardware constitution of the receiver formed according to the present invention. Referring to Figs. 1 and 2, the antennas 101 shown in Fig.1 are equivalents to antennas 201 shown in Fig. 2. The received signal output means 102 shown in Fig.1 is an equivalent to an antenna selecting unit 202 shown in Fig. 2. The demodulating means 103 shown in Fig.1 is an equivalent to a tuner 203, an A/D converter 204, and an OFDM demodulating section 205 shown in Fig. 2. The decoding means 104 shown in Fig.1 is an equivalent to a decoding section 206 shown in Fig. 2. The control means 106 shown in Fig.1 is an equivalent to a controller 230 shown in Fig. 2. The storage section 107 shown in Fig. 1 is an equivalent to amemory231 shown in Fig. 2. The detecting, means 105 shown in Fig.1 is an equivalent to a detector 207 shown in Fig. 2. In an arrangement shown in Fig. 2, as an example of the above-mentioned SN ratio (SNR) , there has been used a ratio of carrier signal to level (CNR) of a pilot signal.

As shown in Fig. 2, transmission signal of OFDM system based on digital broadcasting is received by two or more antennas 201. Here, although the number of antennas may be two or more than two, the embodiment shown in Fig. 2 employs four antennas 201a, 201b, 201c, and 201d. The controller 230 receives CNR information S1 and correction bit number count information S2, thereby making it possible to change a reception condition in accordance with these information S1 and S2. The antenna selecting unit 202 operates to output a transmission signal received by any one of the several antennas (such one antenna is selected by changing a reception condition) to the tuner 203. Here, the tuner 203 comprises an AGC amplifier for gain adjustment, a filter, an oscillator, a mixer and the like (which are all not shown in the accompanying drawings) . Further, the tuner 203 operates to select a desired OFDM signal from transmission signals selected by the antenna selecting unit 202, and outputs the OFDM signal having an intermediate frequency to the A/D converter 204.

The A/D converter 204 carries out an analog-to-digital conversion to convert the transmission signal having an intermediate frequency and outputted from the tuner 203 into digital signal which is then inputted into the OFDM demodulating section 205. The FDM demodulating section 205 comprises an FFT circuit 211, an OFDM frame decoder 212, and a demodulator 213, and it converts a digitalized transmission signal into a baseband signal (multiple baseband OFDM signal), extracts signals contained in a predetermined FFT window period, performs an FFT (fast Fourier transform), and converts the signals into those along the frequency axis. In this way, it is possible to obtain the respective modulated wave symbol signals of a plurality of orthogonal frequency signals forming the OFDM signal. Here, the demodulator 213 demodulates the modulated wave symbol signals to obtain symbol data, performs decoding and reproduces the data, thereby outputting TMCC demodulated signals.

The detector 207 contains a pilot signal extracting unit 225 for extracting multiple carrier pilot signals from signals (carriers) S0 demodulated by the OFDM demodulating section 205, and outputting CNR information (C/N ratio) S1 indicating a ratio of carrier signal level to noise signal level to the controller 230 in accordance with the reception state of the pilot signals. The reception quality of the received transmission signals can be detected in accordance with the CNR information. Further, the transmission signals of digital broadcasting also contain multiple carrier pilot signals as well as broadcast parameters called TMCC.

TMCC (Transmission and Multiplexing Configuration Control) consists of transmission mode (modulation method, coding rate and the like), slot information and TS information or the like. The multiple-modulated digital broadcast transmission signals are reproduced into the respective carriers and detected by virtue of the FFT circuit 211 and the OFDM frame decoder 212. Then, pilot signals whose locations are known are extracted from a plurality of carrier groups. Further, since the level of the pilot signals is AGC controlled so as to be within a predetermined range, it is possible to obtain CNR information by performing level detection orthelike. More exactly, it is possible to calculate and use signals based upon CNR information, in accordance with the output of any one of the FFT circuit 211, the OFDM frame decoder 212, and the demodulator 213, which together form the OFDM modulation section 205.

Since such TMCC is a modulation type of BPSK which can be demodulated even if the transmission state becomes worse more or less, it can be used even if received CNR information has only a low value. For this reason, CNR signal has an advantage of ensuring a large operation range. However, since data carriers occupying most carrier groups are modulated data, their levels and phases will change with the passing of time. In this way, if CNR information is to be obtained, it is appropriate to use pilot signals having a constant behavior.

The decoding section 206 comprises a frequency/time de-interleave processing unit (not shown), a de-mapping unit (not shown), a bit interleave unit (not shown), a de-puncture unit (not shown), a Viterbi decoding unit 221, a byte de-interleave unit (not shown), an energy backward-diffusion unit (not shown), a TS reproducing unit (not shown), a Reed Solomon decoding unit 222, and a correction bit counting unit 223. The Reed Solomon decoding unit 222 is located subsequent to the Viterbi decoding unit 221, corrects an error of data which is already in TS (trans-stream) state and then outputs the data. The correction bit number counting unit 223 counts certain number of bits, or the number of bits (the number of error corrections) whose errors have already been corrected in the Reed Solomon decoding unit 222 during a predetermined time, and then outputs correction bit number-of-counts information S2 to the controller 230. Here, the correction bit number-of-counts information S2 has the same meaning as an error rate (BER) obtained from the number of error corrections, and in the following description, the information contents of the correction bit number-of-counts information 52 will be an error rate (BER).

The Reed Solomon decoding unit 222 operates to correct an error occurred in demodulation data when there is a deterioration in the reception state of a received transmission signal. In fact, the Reed Solomon decoding unit 222 can perform error correction up to 8 bytes per 204 bytes of one packet, and makes it possible to normally reproduce sound and image by virtue of the error correction. When an occurred error is more than the error correction function can process, a reception error state will occur in which sound and image will become incomplete and thus can not be outputted. Actually, a reception quality of receiving a digital broadcasting will depend on whether or not sound and image can be normally outputted. Therefore, it can be said that an error generation density has a higher correlation than an input level of a received transmission signal. Here, since an error generation density is a certain number of data, or a number of data whose error has been corrected in each predetermined time, it is possible to detect whether the reception quality is good or bad in accordance with an error rate (error generation density).

The controller 230 operates to change a reception condition (by performing an antenna switchover among the antennas 201) once the value of BER indicated by the correction bit number-of-counts information S2 becomes equal to or larger than a predetermined value . For example, an operation of changing a reception condition is performed at least in one symbol unit, and then selects an antenna 201 corresponding to an optimal reception condition, in a manner such that a received transmission signal may always be stabilized. In the following description, any one and optimal antenna is selected among four antennas 201a, 201b, 201c and 201d which together form an antenna group 201. However, the present invention is not necessary to be limited to an arrangement in which only one antenna 201 is selected, it is in fact also possible to form an arrangement which can change an antenna group including a plurality of antennas.

In the present embodiment, BER is used as information for judging whether it is necessary to start an operation of changing a reception condition. Afterwards, CNR is used to detect the reception qualities of various reception conditions, thereby allowing an antenna currently in operation to be switched over to an antenna in an optimal reception condition capable of obtaining the highest reception quality, or selecting an optimal antenna group .

The controller 230 judges whether it is necessary to start an operation of changing a reception condition in accordance with the value of BER indicated by the correction bit number-of-counts information S2. Subsequently, search is performed to find an optimal reception condition in accordance with the value of CNR indicated by CNR information S1. Then, a selection signal for selecting an antenna 201 corresponding to an optimal reception condition (which has been found) is outputted to the antenna selecting unit 202. However, such selection can be effected by performing an antenna switchover to select one antenna 201 or an antenna group.

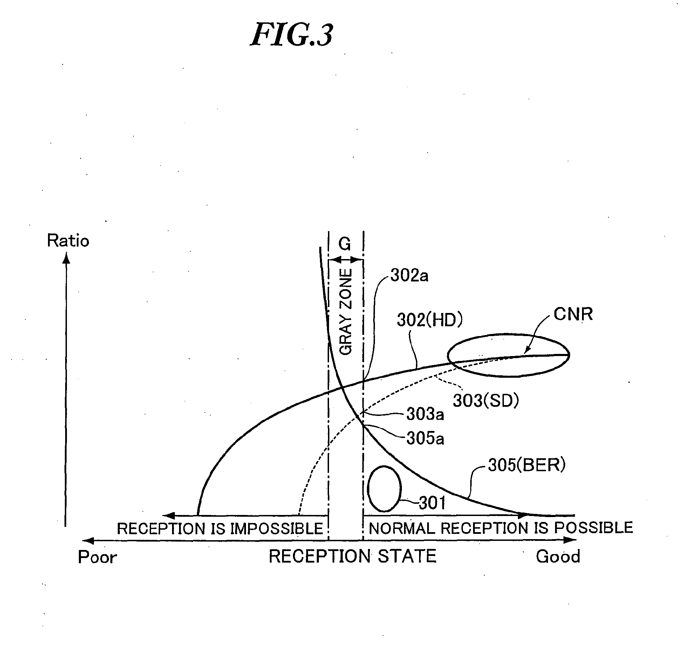

Fig. 3 is a chart showing reception state when the values of BER and CNR change. In Fig. 3, the horizontal axis represents a reception state and the vertical axis represents the ratios of BER and CNR. Actually, Fig. 3 is used to explain a reason of using BER as information for judging whether it is necessary to start an operation of changing a reception condition, and another reason of using CNR to search for an optimal reception condition.

In one-tuner diversity receiving method, it is impossible to know a change in reception condition before the reception condition is changed, nor is it possible to judge whether the reception condition has been improved or deteriorated if the reception condition has not been changed. Accordingly, if an operation of changing a reception condition is performed at the time when a transmission signal can be normally received, there will be a probability of 50% that the reception condition will get deteriorated. In digital broadcasting which is different from analog broadcasting, even if an input level is increased more or less and thus CNR becomes high, almost no change will be found in its reception quality. Accordingly, no advantage will be obtained if the reception condition is changed at the time when the reception radio wave can be received normally. In other words, if a reception condition is changed every predetermined time even when transmission signal is normally receivable (as in a prior art), there will be a probability that the reception condition can be deteriorated.

On the other hand, at the time when it is allowed to assume that the reception condition will be deteriorated, it is effective to change the reception condition so as to find a better reception condition. Here, "the time when it is allowed to assume that the reception condition will be deteriorated" means a situation in which the reception quality will be deteriorated remarkably if the reception condition is not changed or even a situation in which the reception has already become impossible. Further, an area which allows to assume that the reception condition will be deteriorated corresponds to a gray zone G in Fig. 3. For this reason, an area for starting an operation of changing the reception condition should be as close to the gray zone G as possible, such as an area 301 located outside the gray zone G and can normally receive a signal.

In digital broadcasting, C/N ratio (CNR) which can effect a normal reception will be different from time to time, depending on a modulation manner and a folding-in coding rate of a received broadcasting wave. Here, although it is possible to establish an arrangement which can start an operation of changing a reception condition at the time when a CNR capable of reception has been obtained, it is still necessary to change a threshold value for judging whether there is an operation (started or stopped) of changing the reception condition, in accordance with a modulation manner and a folding-in coding rate of a received broadcasting wave. In Fig. 3 showing the characteristics of CNR, a solid line 302 represents the characteristics of high-vision broadcasting (HD), while a dotted line 303 represents the characteristics of standard broadcasting (SD) . For example, when thresholds 302a and 303a for use in changing a reception condition (antenna switchover) are set in an area adjacent to the gray zone G, these thresholds 302a and 303a must be set at different values with respect to the rate of CNR.

Then, as shown in Fig. 3, the change of a rate between the characteristics 302 and 303 of CNR is gentle with respect to a change in antenna input level (reception state). For this reason, when the reception condition is changed only in accordance with CNR, it will be difficult to judge an actual reception state by threshold. Accordingly, in the present embodiment, CNR alone is not used as information for an operation (antenna switchover) of changing a reception condition. Moreover, a judgment is not performed which uses a threshold with respect to a CNR at the time of the current reception. Namely, in the present embodiment, CNR is used only for searching for a reception condition, and a judgment is performed in accordance with a change between a previous CNR value and a current CNR value, thereby obtaining information on the reception state within a time period which is only a fraction of BER.

In fact, a receiver of digital broadcasting will fail to perform a reception once a BER becomes equal to or higher than a predetermined value (theoretical value ≈ 2×10⁻⁴) . Actually, a BER is such that its value capable of normal reception will not vary depending on a modulation manner of digital broadcasting (HD or SD) or a folding-in coding rate. Moreover, since there is a probability of mistaking a received bit, in a boundary (gray zone G) adjacent to a signal receivable area or an un-receivable area, the characteristic 305 of BER will have a digital behavior indicating a sudden change. In particular, a digital broadcasting has a narrower gray zone G (i.e., a narrow width in the horizontal direction shown in Fig. 3) than an analog broadcasting. For this reason, if threshold 305a of BER for changing a reception condition is set in the gray zone G, and if an operation of changing a reception condition is only based on BER, antenna switchover will have to be performed frequently, and there is a possibility of undesirably selecting an antenna which will produce a worse reception condition than one used before the antenna switchover.

As discussed above, a measurement result of BER can be obtained only after having investigated a certain amount (or a certain period) of data. For example, BER =2×10⁻⁴ means that one out of 20, 000 bits of data is an error. However, since an amount of date being sampled is in general greatly larger than 20, 000 bits, a considerable time is needed in obtaining a measurement result. A time for processing BER is as discussed above. Namely, a considerable time is needed in restoring a reception condition if an operation of changing a reception condition is performed only by using BER. For the above reason, in the present embodiment, BER alone is not used as information for an operation of changing a reception condition (antenna switchover). However, in the present embodiment, what has been used in starting an operation of changing a reception condition is BER which is easier to be set as a threshold than CNR.

Accordingly, in the present embodiment, BER is used as information for judging whether it is necessary to start an operation of changing a reception condition, while CNR is used as information for judging a reception quality at the time when a reception condition is changed. In the following, a description will be given to explain a difference between SNR and CNR. Namely, SNR is a ratio of the level of a signal (contained in carrier) to noise level, while CNR is a ratio of carrier level to noise level. By determining a reception condition using SNR, it is possible to judge a relative change of a reception condition in a shorter time period than judging a reception condition in accordance with BER. However, in order to correctly judge a reception situation, it is preferable to use CNR of a pilot signal having a stable behavior in its signal level and phase. Further, so-called carrier contains only a carrier signal for transmitting dynamically changing information such as sound or image, but also a carrier signal such as AC having only a relatively small change. Therefore, it is possible to obtain an effect near CNR by using SNR generated from a carrier having a small change, in its signal level. Next, description will be given to explain various embodiments of an operation for changing a reception condition, with reference to some related flow charts.

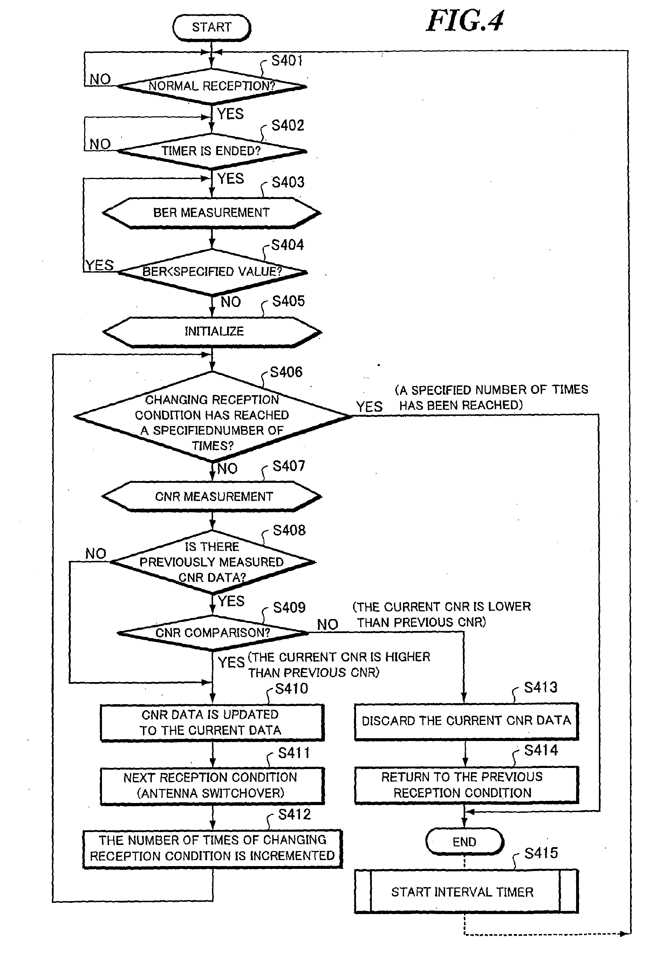

Embodiment 1 is a process for returning a reception condition to its previous state existing before an operation of changing a reception condition is performed, which process is carried out when the reception state has deteriorated after an operation of changing a reception condition. Fig. 4 is a flow chart showing the contents of the process for an operation of changing a reception condition, according to Embodiment 1.

The following process is executed by the control means 106 shown in Fig. 1 (or the controller 230 shown in Fig. 2), and performed periodically with a guard interval arranged for every two or more symbols constituting a frame of an OFDM system. At first, it is judged (Step S401) whether a radio wave of transmission signal is normally receivable. Then, during a sweep reception or when setting or changing a reception condition, if it is impossible to perform a normal reception due to a reception error (Step S401: No), the process will not proceed to the following operation for changing a reception condition. On the other hand, if it is possible to normally receive a radio wave (Step S401:Yes), the process will judge whether an interval timer is ended (Step S402 ) . If the interval timer is in operation (Step S402: No) , the process will not proceed to a next operation of changing a reception condition, but will wait until the ending of the timer (time up).

When an interval timer is in its inoperative state or when an interval timer is already ended (Step S402:Yes), a BER will be measured (Step S403), with a measured value of BER compared with a specified value (Step S404) . As described above, in the present embodiment, it is then judged whether it is necessary to start an operation of changing a reception condition, in accordance with the value of BER. Namely, after having measured BER in step S403, it is judged in step S404 whether it is necessary to start an operation of changing a reception condition. In other words, during an operation of processing BER such as counting in step S403, anoperation of changing a reception condition is not started. Here, the above specified value is set as a threshold 305a along the characteristic 305 of BER shown in Fig. 3, in the vicinity of a boundary located between the gray zone G and an area capable of normal reception.

Here, when the BER of a transmission signal based on a received radio wave is less than a specified value (BER < specified value) , since a reception at this time is in an acceptable state, the process will not proceed to a next operation of changing the reception condition (Step S404: Yes), but will return back to Step S403. On the other hand, if the BER of a transmission signal based on a received radio wave is equal to or larger than a specified value (BER ≧ specified value) (Step S404:No), since a reception at this time is in an unacceptable state, an operation of changing the reception condition is started, thereby executing a next step.

Once an operation of changing the reception condition is started, at first an initialization is carried out (Step S405). In the initialization, data such as the number of times of changing the reception condition and CNR data, all stored in the storage section 107 (show in Fig.1), will be cleared. Here, "changing reception condition" means one antenna currently in operation is switched over to another antenna if reception is for example an antenna switchover type. On the other hand, if reception is a phase difference feeding type based on an antenna group including several antennas, the phase and gain of each antenna will be changed so as to change the state of a received signal (signal level and delay state) under a condition of using an antenna group including several antennas.

Next, it is judged whether the number of times of changing a reception condition has reached a specified number (Step S406) . Here, "a specified number of times" means the number of times for changing a reception condition. Although the number of times is set up in advance, since it will be changed depending on a method of changing a reception condition and an antenna connection state, such number of times is not necessarily to be the same as the number of antennas arranged therein. If in step S406 the number of times of changing a reception condition has not reached the specified number (Step S406: No), CNR measurement will be performed (Step S407). On the other hand, if in step S406 the number of times of changing a reception condition has reached the specified number (Step S406: Yes), the operation of changing a reception condition will be terminated.

As described above, in the present embodiment, after starting an operation of changing a reception condition, the process will search for an optimal reception condition using the value of CNR. Namely, at first, it is judged whether there is CNR data measured last time (Step S408) . If it is judged that there is no such CNR data measured last time and that the current measurement is an initial one (Step S408: No), the value of CNR measured in state S407 is used as the current CNR data which is then stored in the second storing means 107b (refer to Fig.1) (Step S410), followed by performing an antenna switchover so as to change the current reception condition over to a next reception condition (Step S411). Then, the number of times of changing a reception condition is incremented (Step S412), so that the process returns back to Step S406. Subsequently, an identify flag is set at the position of a new reception condition stored in the first storing means 107a (refer to Fig.1). Here, the number of times of returning to a previous step is used as an operation for changing a reception condition and is executed only for specified times in state S406. In this way, since it is allowed to execute a processing of searching for an optimal reception condition in step S406 to Step S412 by using CNR (CNR information S1), it is possible to complete the desired processing in a shorter time period than a processing using BER.

In Step S408, when the value of CNRmeasured last time is stored in the second storing means 107b and then exists therein (Step S408: Yes) , the value of the current CNR and the value of CNR measured last time are compared with each other (Step S409). If the value of the current CNR has increased so that it has exceeded the value of CNR last stored in the second storing means 107b (Step S409:Yes) , the process will proceed to step S410. Further, when the value of CNR based on a changed reception condition has exceeded the value of CNR based on a previous reception condition (before being changed) , the value of CNR measured in the current step S407 will be stored as the current CNR data in the second storing means 107b (Step S410) , followed by an antenna switchover operation to switchover the current reception condition to a next one (Step S411 ) , further by an increment for incrementing the number of times of changing a reception condition (Step S412), so that the process returns back to Step S406. Then, when the number of times of changing a reception condition has reached a specified value (Step S406: Yes), the operation of changing a reception condition is ended.

On the other hand, when the value of the current CNR becomes lower than the value of CNR last stored in the second storing means107b (Step S409: No), the data of the current CNR is discarded (Step S413), so that the process returns back to a previous reception condition (Step S414). Then, an identifying flag is set to the previous reception condition stored in the first storing means 107a. In this way, as a result of having changed a reception condition, when CNR has decreased, the receiver will return back to its original reception condition, thus ending the operation of changing a reception condition. In more detail, if an antenna last selected is defined as Ant_n, such an antenna will become Ant_n+1 after an operation of changing a reception condition, and will return back to the previous Ant_n when CNR has decreased.

A series of steps for changing a reception condition can be ended by virtue of the above procedure. However, during a normal reception for receiving a radio wave, the process will periodically return back to its initial state (Step S401). In fact, such a returning is effected after starting an interval timer (Step S415) . By starting an interval timer, it is possible to avoid a problem that a series of steps for changing a reception condition can not be converged. Namely, if a reception condition always stays near a certain state, an optimal reception state might not be obtained all the time. Accordingly, an operation of changing a reception condition will be stopped for a certain time period by virtue of an interval timer, thereby avoiding the above problem of non-converging.

In Step S409 of the above-described embodiment, when the value of the current CNR has exceeded the value of the last CNR (Step S409: Yes), the current reception condition is switched over to a next reception condition (Step S411) . However, it is also allowed not to perform such a switchover at once, but still to use the current reception condition. In this way, it is possible to obtain a desired reception condition which is better than one existing before the changing operation, using only a reduced number of changing times.

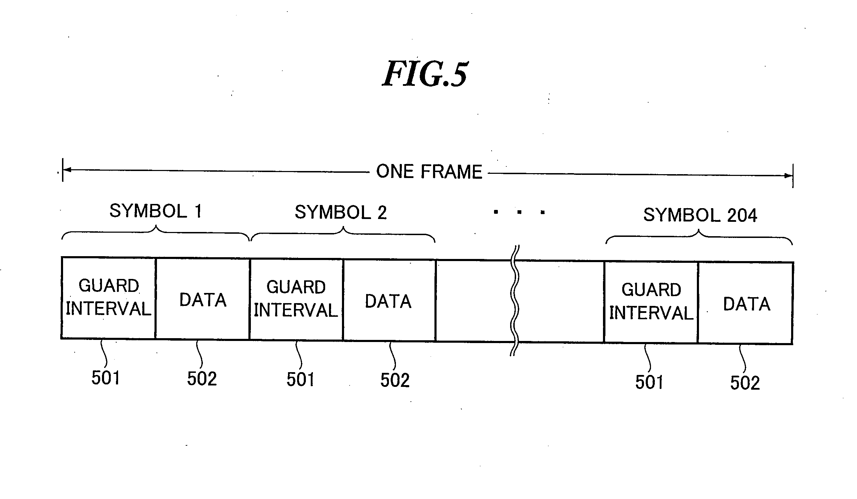

Fig. 5 is an explanatory view showing the contents of a transmission signal. Since the changing of a reception condition is performed in synchronism with the timing of a guard interval, it is possible to carry out an interval timer per symbol unit, i.e., per reception of a guard interval 501 and data 502. Besides, it is also possible to carry out an interval timer per frame units (containing 204 symbols in all). In addition, it is further possible to carry out the internal timer at a timing which is an integer multiple of a symbol or a frame.

### (Embodiment 2)

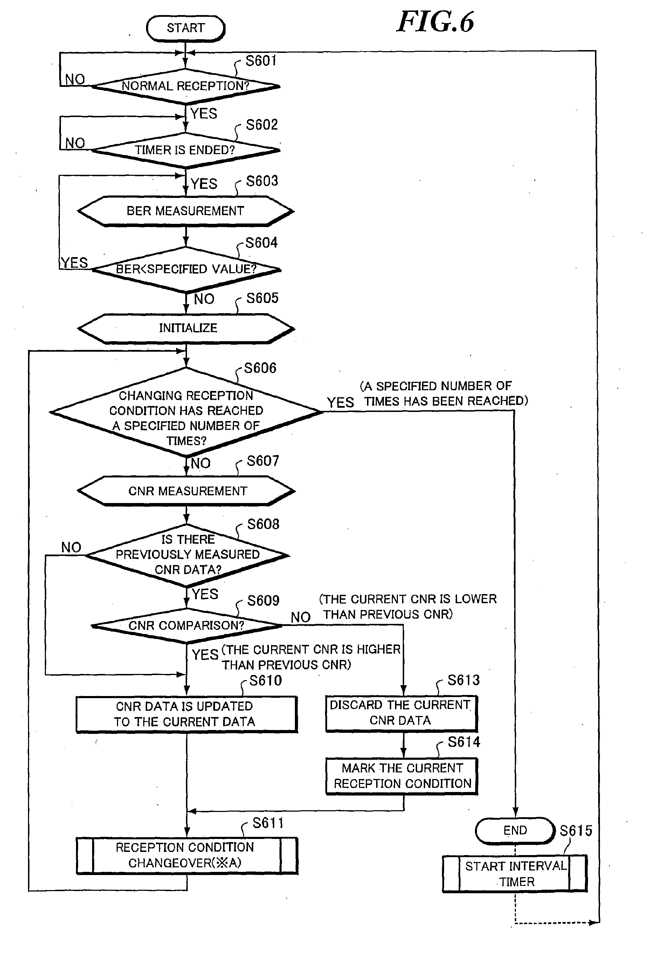

Embodiment 2 shows that when a reception condition has become worse after an operation of changing a reception condition, the current reception condition is marked and then changed in accordance with the marked number of times. Fig. 6 is a flow chart showing the contents of a processing for changing a reception condition in accordance with Embodiment 2.

The following process is executed by the control means 106 (refer to Fig.1) as in Embodiment 1, and is performed periodically at guard intervals disposed per several symbols forming reception waves based on OFDM system. At first, it is judged whether a radio wave can be normally received (Step S601). Then, during a sweep reception or during the setting or changing of a reception condition, if a normal reception can not be effected due to a reception error (Step S601: No), the process will not proceed to a next operation for changing a reception condition. On the other hand, if it is possible to perform a normal reception (Step S601:Yes) , the process will judge whether an interval timer is ended (Step S602). When an interval timer is in operation in a step which will be described later (Step S602 : No) , the process will not proceed to a next operation for changing a reception condition, but will wait until the timer is ended (time up).

When an interval timer is not in operation, or when an interval timer had been in operation but is now ended (Step S602:Yes), a BER is measured (Step S603) and the value of the BER is compared withapredeterminedspecifiedvalue (Step S604) . Then, as described above, in the present embodiment, the process judges whether it is necessary to start an operation of changing a reception condition in accordance with the value of the BER. Namely, after measuring a BER in Step S603, the process judges (in Step S604) whether it is necessary to start an operation of changing a reception condition. That is, during a processing such as an operation of counting BER in Step S603, an operation of changing a reception condition will not be started. Here, a specified value is set as a threshold 305a along the characteristic 305 of BER shown in Fig. 3, in the vicinity of a boundary located between the gray zone G and an area capable of normal reception.

Here, when the BER of a transmission signal based on a received radio wave is less than a specified value (BER< specified value) (Step S604:Yes), since a reception state at this time is acceptable, the process will not proceed to a next operation of changing a reception condition, but will return to Step S603. On the other hand, when the BER of a transmission signal based on a received radio wave is equal to or larger than a specified value (BER ≧ specified value) (Step S604:No), since a reception condition at this time is unacceptable, the process starts a next operation of changing a reception condition.

Upon starting an operation of changing a reception condition, an initialization is performed at first (Step S605) . Actually, such an initiali zation can clear the number of times of changing a reception condition and also clear some data such as CNR data stored in the storage section 107. Here, as described above, "changing a reception condition" means "changing one antenna over to another" in case an antenna system is a switchover type, but means "changing the phase and gain of each antenna so as to change the state of a received signal" in case an antenna system is a phase difference feeding type based on a plurality of antennas.

Next, it is judged whether the number of times of changing a reception condition has reached a specified number (Step S606). Here, the specified number of times is the number of times of changing a reception condition. Here, although the number of times is set up in advance, since it will be changed depending on a manner of changing a reception condition and on an antenna connection state, such number of times is not necessary to be equal to the number of antennas arranged therein. If in step S606 the number of times of changing a reception condition has not reached a specified number (Step S606: No), CNR measurement will be performed (Step S607). On the other hand, if in step S606 the number of times of changing a reception condition has reached a specified number (Step S606: Yes) , an operation of changing a reception condition will be ended.

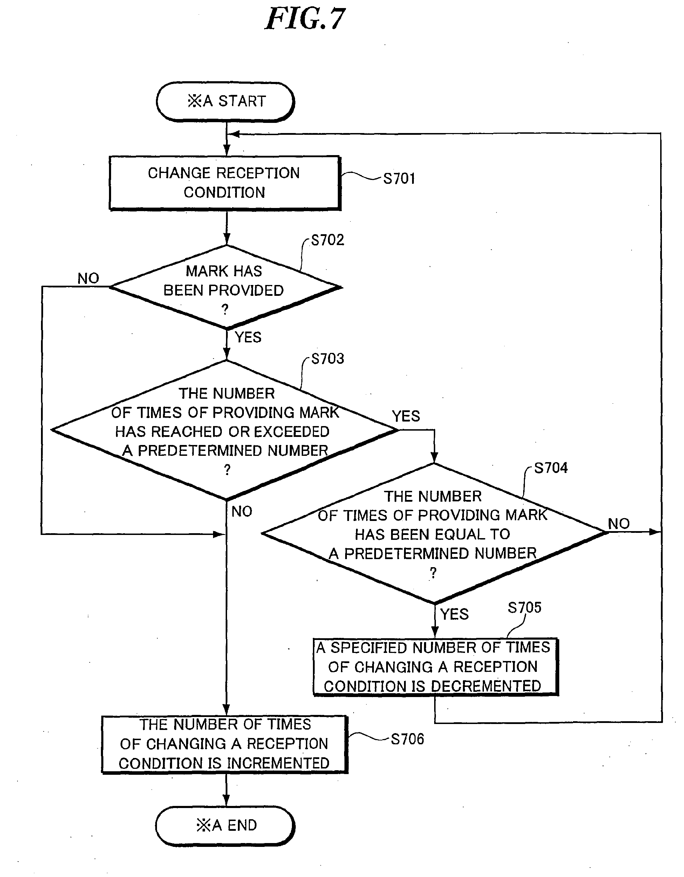

Next, CNR measurement is performed (Step S607) . As described above, in the present embodiment, after starting an operation of changing a reception condition, the process will search for an optimal reception condition in accordance with the value of a CNR. Namely, at first, it is judged whether there is CNR data measured last time (Step S608). If it is judged that there is no CNR data measured last time and that the current measurement is an initial one (Step S608: No), the value of a CNR measured in step S607 is used as the current CNR data which is then stored in the second storing means 107b (Step S610), followed by searching for an optimal reception condition and performing an antenna switchover (Step S611), so that the process returns back to Step S606. Here, the number of times of returning to a previous step is used in an operation of changing a reception condition and is executed only for specified times in step S606. Here, the contents of an operation for the changing over of a reception condition in Step S611 can be described with reference to Fig. 7.

On the other hand, if in Step S408 when the value of a CNR measured last time is stored in the second storing means 107b (Step S408 : Yes) , the value of the current CNR and the value of a CNR measured last time are compared with each other (Step S609). If the value of the current CNR is larger than the value of a CNR last stored in the second storing means 107b (Step S609:Yes), the process will proceed to step S610. On the other hand, if the value of the current CNR is lower than the value of a CNR stored in the second storing means 107b (Step S609:No), the data of the current CNR will be discarded (Step S613), while a mark will be provided (Step S614) to the current reception condition stored in the first storing means 107a, so that the process proceeds to Step S611.

Fig. 7 is a flow chart which shows the contents of processing for reception condition switchover according to Embodiment 2 . Each operation shown in Fig. 7 is carried out in Step S611 shown in Fig. 6. Namely, at first, a reception condition is changed (Step S701) . Next, it is judged whether a mark has been provided to the changed reception condition (Step S702) . If the mark has been provided to the changed reception condition (Step S702: Yes) , it is then judged whether the number of times of providing mark has reached or exceeded a predetermined number (Step S703).

If it is judged in Step S703 that the number of times of providing mark has reached or exceeded the predetermined number ( Step S703 : Yes ) , it is them judged whether the number of times of providing mark is equal to the predetermined number (Step S704). If the number of times of providing mark is equal to the predetermined number (Step S704: Yes) , a specified number of times of changing a reception condition is incremented (Step S705), so that the process returns back to Step S701. On the other hand, If the number of times of providing mark is not equal to the predetermined number (Step S704 : No), the process will return back to Step S701.

Besides, if it is determined in Step S702 that the changed reception condition has not been provided with a mark (Step S702: No), and if it is determined in Step S703 that the number of times of providing mark has not reached a predetermined number (Step S703 : No), the number of times of changing a reception condition is incremented (Step S706), thereby ending Step S611 (refer to Fig. 6) .

Further, the above processing will be explained again with respect to CNR. In the following description, among the processing contents shown in Figs. 6 and 7, only those necessary in description will be extracted and used. Moreover, as a result of changing a reception condition, if CNR is equal to the last measured one (measured last time), or if it has become better than the one measured last time (i.e., increased) (Step S6091: Yes), the current reception condition will be changed to a next one (Step S701) . Accordingly, mark will not be provided to the reception condition, while the number of times of changing a reception condition is incremented (Step S704), thereby ending Step S611. On the other hand, as a result of changing a reception condition, if CNR has decreased (Step S609: No), mark will be provided to the reception condition stored in the first storingmeans 107a (Step S614) , and the reception condition is thus changed (Step S701). Further, if the number of times of providing mark is equal to or larger than a predetermined number (Step S703: Yes), the current reception condition will be changed to a next reception condition (Step S701). On the other hand, if the number of times of providing mark has not reached the predetermined number (Step S703: No), the reception condition will not be changed, while the number of times of changing a reception condition will be incremented (Step S706), thus ending Step S611. The above processing is performed only once on the antenna Ant under that reception condition.

A processing shown in Fig. 7 will be explained using a detailed example of how the switchover of antenna Ant can be performed. For example, such an example may show that the processing is performed after a reception condition has been changed and when there is a deterioration in CNR based on an elected antenna Ant_n+1 after antenna switchover. Namely, when a reception condition based on a current antenna Ant_n is changed, i.e., when the current antenna has been switched over to another antenna Ant_n+1, if the number of times of providing mark to the reception condition is equal to or larger than a predetermined number, the antenna Ant_n+1 will be skipped over, so that the current antenna will be switched over to an antenna Ant_n+2. In this way, according to the processing shown in Fig. 7, if the number of times of providing mark to the reception condition is equal to or larger than a predetermined number at the time when the reception condition is changed, it is allowed to skip over the current reception condition to change the reception condition to another one.

However, if a reception condition constantly has a low CNR, it is allowed to consider that an antenna itself is in a deficient connection, so that a failure is likely to occur. On the other hand, if the foregoing mark is provided, an improved arrangement can be formed so as to avoid selecting an undesired reception condition as possible as the system can. Moreover, in such a circumstance, if a specified number of times of changing a reception condition is reduced without selecting an undesired reception condition, it is possible to quickly determine an optimal reception condition (antenna Ant). Nevertheless, it is also allowed to consider that a timing for clearing the information of mark can be cleared every time an electric power is turned on.

A series of steps for changing a reception condition can be ended by virtue of the above-described procedure. However, during a normal reception for receiving a radio wave, the foregoing process will periodically return back to its initial state (Step S601 shown in Fig. 6) . In fact, such a returning is effected after starting an interval timer (Step S615). By starting an interval timer, it is possible to avoid a problem that a series of the above-described steps for changing a reception condition can not be converged. Namely, if a reception condition always stays near a certain state, an optimal reception state might not be obtained all the time. Accordingly, an operation of changing a reception condition will be stopped for a certain time period by virtue of an interval timer, thereby avoiding the above problem of not converging.

In this way, since CNR (CNR information S1) is used to carry out a process which searches for an optimal reception condition in subsequent steps (from step S606 shown in Fig. 6 to step S704 shown in Fig. 7) after starting an operation of changing a reception condition (Embodiment 2), it is possible to complete the process in a shorter time than a process using BER. Moreover, the changing of a reception condition in Embodiment 2 is performed synchronously with the timing of a guard interval. Besides, an interval timer can be performed at 1 symbol unit and a frame (204 symbols) unit, and it may also be performed at a timing of an integer multiple of a symbol or a frame.

### [Embodiment 3]

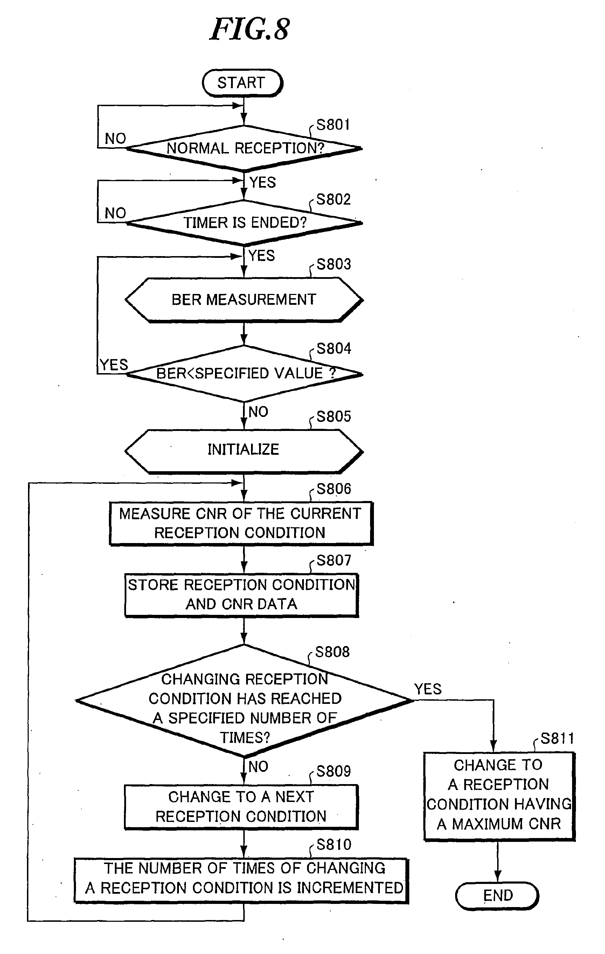

Embodiment 3 shows that when a reception state becomes worse, CNRs in relation to all antennas are obtained, and the reception condition is switched over by switching the current antenna over to an antenna having a maximum CNR. Fig. 8 is a flow chart showing the contents of processing for an operation of changing a reception condition according to Embodiment 3.

The following process is executed by the control means 106 shown in Fig. 1 (or by the controller 230 shown in Fig. 2) , and carried out periodically at a guard interval arranged for each group of symbols forming a frame of OFDM system. Namely, at first, it is judged whether a radio wave of a transmission signal can be normally received (Step S801) . Then, during a sweep reception or during the setting or changing of a reception condition, if it is judged that a radio wave of a transmission signal can not be normally received due to a reception error (Step S801 :No) , the process will not proceed to a next step for an operation of changing a reception condition. On the other hand, if it is judged that a radio wave of a transmission signal can be normally received (Step S801:Yes), it is then judged whether an interval timer is ended (Step S802). If it is judged that an interval timer is still in operation (Step S802: No), the process will not proceed to a next step for changing a reception condition, but will wait until the timer is ended (time up).

On the other hand, if an interval timer is not in operation, or if an interval timer is ended (Step S802: Yes) , BERwill be measured (Step S803) and the value of the BER is compared with a specified value (Step S804). Then, it is judged whether it is necessary to start an operation of changing a reception condition in accordance with the value of the BER. After measuring a BER in Step S803, it is then judged in Step S804 whether it is necessary to start an operation of changing the reception condition. That is, during an operation of counting BER in Step S803, the process does not start an operation of changing a reception condition. At this time, a specified value is set as a threshold 305a along the characteristic 305 of BER shown in Fig. 3, in the vicinity of a boundary located between the gray zone G and an area capable of normal reception.

Here, if the BER of a transmission signal based on a received radio wave is less then a specified value (BER < specified value) , since a reception state at this time is acceptable, the process will not proceed to an operation of changing the reception condition (Step S804: Yes), but will return back to Step S803. On the other hand, if the BER of a transmission signal based on a received radio wave is equal to or larger than a specified value (BER □specified value) (Step S804 :No) , since a reception state at this time is not acceptable, the process will start an operation of changing the reception condition and execute the following processing.

Upon starting an operation of changing a reception condition, at first, an initialization is carried out (Step S805). Such an initialization clears the number of times of changing a reception condition and CNR data stored in the storing means 107. Here, "changing a reception condition" means "changing one antenna over to another antenna" in case of a switchover type, but means "changing the phase and gain of each antenna so as to change the state (signal level and delay state) of a received signal transmitted through an antenna group" in case of a phase difference feeding type based on the antenna group.

Next, the CNR of the current reception condition is measured (Step S806) . Then, CNR data is stored in the second storing means 107b (Step S807) . In fact, CNR data is stored in the second storing means 107b corresponding to a reception condition stored in the first storingmeans 107a. Afterwards, it is judgedwhether the number of times of changing a reception condition has reached a specified number (Step S808 ) . Here, "the number of times" means "the number of times of changing a reception condition." Actually, a fixednumber of times is set in advance. However, since a method of changing a reception condition is likely to change due to an antenna connection state, such a method does not always coincides with the number of the antennas installed in the receiver. Thus, if it is determined in step S808 that the number of times of changing a reception condition has not reached a specified number (Step S808: No), the current reception condition will be switched over to a next reception condition (Step S809) , and the number of changing times is incremented (Step S810), so that the process returns back to Step S806. On the other hand, once the number of times of changing a reception condition has reached a specified number in step S808 (Step S808: Yes), the current reception condition will be switched over to another reception condition having a maximum CNR (Step S811 ) , thereby ending the operation of changing a reception condition.

A process from Step S810 to Step S806 serves an action for changing a reception condition and is executed for a specified number of times in Step S808. Therefore, it is understood that if a reception condition is changed using CNR (CNR information S1) , it is allowed to execute the desired process in a shorter time than a process using BER.

A series of steps for changing a reception condition can be ended by virtue of the above procedure. However, during a normal reception for receiving a radio wave, a process from step S801 onwards is started in each predetermined period. In fact, such a period is obtained after starting an interval timer . By starting an interval timer, it is possible to avoid a problem that a series of the above steps for changing a reception condition cannot be converged. Namely, if a reception condition always stays near a certain state, an optimal reception state might not be obtained all the time. Accordingly, an operation of changing a reception condition will be stopped for a certain time period by virtue of an interval timer, thereby avoiding the above problem of not converging.

According to the above-explained embodiment, the present invention is constructed such that after starting a reception condition changing operation using information of BER, an optimal reception condition can be searched for by using an information of an SN ratio, such as CNR or the like, thereby making it possible to search for an optimal reception condition efficiently in a short time period. Further, since the present invention is constructed such that a reception condition is changed into a different one at the time of searching for a reception condition, and since such a searching is allowed to be performed irrespective of whether or not it is in a predetermined procedure, it is possible to prevent a reception state from getting worse (even if it is already in a bad condition), thereby obtaining a stable reception quality. Therefore, it is possible to constantly select an optimal antenna and ensure an effect of obtaining a stabilized reception quality.

Although a receiver with 1-tuner diversity was explained as an example in the above-described embodiment of the present invention, this embodiment can also be applied to a receiver having two tuners and 2-tuner diversity for synthesizing the outputs of a plurality of tuners, or can be applied to a receiver having more than two tuners.

In addition, the receiver explained in the present embodiment can be controlled, by executing a prepared reception control program in a computer such as a personal computer or the like. Such program may be recorded on a storage medium capable of being read by computers, such as hard disk, flexible disk, CD-ROM, MO, DVD and the like, and then, can be executed when being read out by the computer from one of the storage mediums described above. Moreover, this program may also be a transmission medium capable of being distributed by a network system, such as the Internet or the like.

As has been described above, the receiver, the receiving method, the program for controlling the reception, as well as the storage mediums (all formed according to the present embodiment), can be applied to an industrial field such as ground wave digital broadcasting and communication, and to a wide-band radio system or the like, besides a radio or television set and a navigation apparatus including the radio or television set. Especially, the receiver of the present inventionprovides a stable reception quality when being used as a receiver in a mobile body (such as car, train, ship and the like) or as a portable receiver wherein a reception state changes frequently.

While there has been described what are at present considered to be preferred embodiments of the present invention, it will be understood that various modifications may be made thereto, and it is intended that the appended claims cover all such modifications as fall within the true spirit and scope of the invention.

## Claims

1. A receiver comprising:
a plurality of antennas (101) for receiving a radio wave;
received signal output means (102) for outputting a received signal using one or more of the plurality of antennas (101);
demodulating means (103) for demodulating the received signal and outputting a demodulated signal;
decodingmeans (104) for correcting an error of the demodulated signal;
detecting means (105) for detecting an SN ratio of the received signal; and
control means (106) for controlling the received signal output means (102) in accordance with a detected SN ratio and an error correction rate of the decoding means (104).

2. The receiver according to claim 1,
wherein the detecting means (105) includes a pilot signal extracting unit for extracting a pilot signal from the demodulated signal,
wherein the detecting means (105) detects, as an SN ratio, a ratio of carrier signal level to noise from an extracted pilot signal.

3. The receiver according to claim 1 or 2, wherein the control means (106) includes a judging unit (106a) for judging whether it is necessary to change a reception condition of the received signal output means(102), in accordance with the error correction rate.

4. The receiver according to claim 3, wherein the judging unit judges (106a) whether it is necessary to change a reception condition, using a threshold corresponding to an error correction rate which allows a normal reception of a radio wave.

5. The receiver according to claim 3 or 4, wherein when the judging unit (106a) judges that it is necessary to change a reception condition, the control means (106)determines a reception condition in accordance with an SN ratio, and controls the received signal output means in accordance with the reception condition.

6. The receiver according to claim 3, 4 or 5, wherein when the judging unit (106a) judges that it is necessary to change a reception condition, the control means (106) changes the reception condition and performs a comparison between two SN ratios obtained before and after the changing of reception condition, and controls the received signal output means (102)in accordance with the result of the comparison.

7. The receiver according to claim 6, wherein when the result of the comparison indicates that an SN ratio based on a changed reception condition is higher than an SN ratio based on an unchanged reception condition, the control means (106) controls the received signal output means (102) in accordance with the changed reception condition.

8. The receiver according to claim 6, wherein when the result of the comparison indicates that an SN ratio based on a changed reception condition is higher than an SN ratio based on an unchanged reception condition, the control means (106) changes a reception condition and performs a comparison between two SN ratios obtained before and after the changing of reception condition

9. The receiver according to claim 8, wherein the control means (106) controls the received signal output means (102) in accordance with a reception condition obtained when the number of times of changing a reception condition has reached a predetermined number.

10. The receiver according to any one of claims 6 - 9, wherein when the result of the comparison indicates that an SN ratio based on a changed reception condition is lower than an SN ratio based on an unchanged reception condition, the control means (106) returns a reception condition to its previous state.

11. The receiver according to any one of claims 6 - 10, further comprising a first storing means (107a) for storing reception conditions,
wherein when the result of a comparison based on the control means (106) indicates that an SN ratio based on a changed reception condition is lower than an SN ratio based on an unchanged reception condition, the first storing means (107a) provides the changed reception condition with a mark and stores the marked reception condition,
wherein the control means (106) controls the received signal output means (102)in a manner such that a reception condition, in which an operation of providing mark has been performed for a predetermined number of times, will not be selected from among the reception conditions stored in the first storing means (107a).

12. The receiver according to claim 3 or 4, wherein when the judging unit (106a) judges that a reception condition should be changed, the control means (106) obtains SN ratios based on a plurality of reception conditions, and controls the received signal output means (102) in accordance with a reception condition indicating a maximum SN ratio.

13. The receiver according to claim 3 or 4, further comprising a second storing means (107a) for storing SN ratios, wherein when the judging unit (106a) judges that a reception condition should be changed, the control means (106) selects a reception condition in accordance with the value of an SN ratio stored in the second storing means, and controls the received signal output means (102) in accordance with the reception condition.

14. The receiver according to claim 13, wherein when the judging unit (106a)judges that a reception condition should be changed, the control means (106) changes the reception condition, compares an SN ratio based on a changed reception condition with an SN ratio based on an unchanged reception condition and stored in the second storing means (107b) , and controls the received signal output means (102)in accordance with the result of the comparison.

15. The receiver according to any one of claims 1 - 14, wherein the control means (106) controls the received signal output means (102), using characteristic of an SN ratio corresponding to a modulation manner of a radio wave.

16. A receiving method comprising:
a received signal outputting step of outputting a received signal, using one or more of a plurality of antennas (101);
a demodulating step of modulating the received signal outputted in the received signal outputting step and outputting a demodulated signal;
a decoding step of performing an error correction on the demodulated signal outputted from the demodulating step;
a detecting step of detecting an SN ratio of the received signal; and
a controlling step of controlling an output of the received signal in the received signal outputting step, in accordance with an SN ratio detected in the detecting step and an error correction rate of the demodulated signal outputted from the demodulating step.

17. A reception control program for controlling a receiver by a computer, which receiver outputs a received signal using one or more of a plurality of antennas, demodulates the received signal and outputs a demodulated signal, and performs an error correction on the demodulated signal,
wherein the reception control program enables the computer to detect an SN ratio of the received signal, and controls the output of the received signal in accordance with the detected SN ratio and an error correction rate of the demodulated signal.

18. A storage medium storing the reception control program recited in claim 17.
